Europäisches Patentamt

European Patent Office

Office européen des brevets

(11) Veröffentlichungsnummer: **0 413 846 A1**

# EUROPÄISCHE PATENTANMELDUNG

(21) Anmeldenummer: 89115601.0

(51) Int. Cl.⁵: **B65D 71/04**

(22) Anmeldetag: 24.08.89

(43) Veröffentlichungstag der Anmeldung:
**27.02.91 Patentblatt 91/09**

(84) Benannte Vertragsstaaten:
**AT BE CH DE ES FR GB GR IT LI NL SE**

(71) Anmelder: **Fr. Sander GmbH & Co.**
**Rudolfstrasse 2-4**
**D-5600 Wuppertal 2(DE)**

(72) Erfinder: **Schmidt, Wolfgang**
**Theodor-Heuss-Strasse 50**
**D-5830 Schwelm(DE)**

(74) Vertreter: **Rieder, Hans-Joachim, Dr. et al**
**Corneliusstrasse 45 Postfach 11 04 51**
**D-5600 Wuppertal 11(DE)**

(54) Kantenschutz-Eckwinkel.

(57) Die Erfindung betrifft einen Kantenschutz-Eckwinkel für umschnürte Packstücke oder dergleichen mit einem Umschnürungsband-Durchtrittsfenster, welches über einen Schlitz zum Rand hin offen ist, und schlägt zur Erzielung einer gebrauchsoptimalen Lösung vor, daß der dem Schlitz (11) zum Rand (10) hin benachbarte Bereich als elastisch ausbiegbare Lasche (12) gestaltet ist, der Schlitz (11) schiefwinklig zur Erstreckungsrichtung (x-x) der Durchtrittsfenster (9) verläuft und eine zweite jenseits des Schlitzes liegende ebenfalls mit Abstand zur Eckwinkelanlageebene frei vorstehende Lasche vorgesehen ist.

FIG.7

## KANTENSCHUTZ-ECKWINKEL

Die Erfindung betrifft einen Kantenschutz-Eckwinkel für umschnürte Packstücke, Gebinde oder dergleichen gemäß Gattungsbegriff des Hauptanspruches.

Bei den bekannten Lösungen dieser Art besteht der Kantenschutz-Eckwinkel aus übereinander geschichteten, untereinander verklebten Pappschichten, und das Durchtrittsfenster schließt mit dem Schlitz ein E-Profil ein. Das Einfädeln des Bandes durch den Schlitz bis in die freie Durchtrittslage im Durchtrittsfenster ist schwierig und verlangt bzw. bedingt in vielen Fällen eine ungünstige Querschnittsknickung des Bandes. Die biegungssteife Ausgestaltung des Kantenschutz-Eckwinkels ist darüber hinaus auch anbringungstechnisch unvorteilhaft.

Daneben sind Kantenschutz-Eckwinkel aus Plastikmaterial bekannt. Bei einem Teil dieser Lösungen besitzt jeder Schenkel des Eckwinkels am freien Endbereich eine erhöht liegende Lasche, unter welche das Umschnürungsband eingeschoben werden kann. Andere Plastik-Kantenschutz-Eckwinkel (US-PS 30 73 439) verzichten völlig auf Umschnürungsband-Durchtrittsfenster und besitzen entsprechende Fenster nur, um mit dem Abschnitt eines Klebestreifens hindurchzugreifen zwecks Anklebung des Kantenschutz-Eckwinkels auf dem Packstück. Bei diesen Eckwinkeln kommt ein nicht unwesentlicher Zwischenraum zustande dadurch, daß das Band im Anschluß an die Randkante des Eckwinkels frei gespannt verläuft, bis es wieder in die Anlagestellung am Packstück gelangt. Es können sich dort leicht auch Teile verhaken.

Bei noch anderen Ausführungsformen von Kantenschutz-Eckwinkeln aus Plastikmaterial hat man auf ein Umschnürungsband-Durchtrittsfenster ganz verzichtet und vielmehr die Breitseitenfläche des Eckwinkelsschenkels in Richtung eines Schlitzes scharfkantig zulaufen lassen, jenseits welches Schlitzes dann eine Zunge liegt, die durch einen Abstand zur gegenüberliegenden Schenkelkante einen Einfädelschlitz beläßt. Die Zunge ist ihrerseits wieder aus dünnerem Material, um an der packstückseitigen Breitfläche einen Freiraum zu belassen zum Durchtritt des Umschnürungsbandes. Obwohl diese Lösung entsprechende Umschnürungsbandführungen an beiden Winkelschenkeln vorsieht, lassen sie sich nicht zur Erstellung horizontaler Umreifungen verwenden; es besteht die Gefahr, daß der Kantenschutzwinkel schon herausgefallen ist, bevor das Band die genügende Spannung besitzt, um ihn zu halten. Insofern ist also das Umreifen von Packstücken mit diesen Kantenschutz-Eckwinkeln erheblich beschränkt und erschwert. Auch ist der feste Sitz zum Band nicht für alle Einsatzzwecke genügend groß.

Die Aufgabe der vorliegenden Erfindung besteht darin, einen gattungsgemäßen Kantenschutz-Eckwinkel so auszugestalten, daß er bei einfachster Bauform in optimaler Weise angepaßt ist auf eine schnelle und störungsfreie Packstückumschnürung mit entsprechenden Bändern, ohne die spätere Handhabung des Packstückes zu beeinträchtigen.

Erreicht ist dies durch die im Kennzeichen des Hauptanspruches angegebene Erfindung. Die Unteransprüche stellen vorteilhafte Weiterbildungen dar.

Zufolge dieser Ausgestaltung ist ein Kantenschutz-Eckwinkel geschaffen, der bei einfacher Bauform eine günstigste Handhabung gestattet. Das Umschnürungsband läßt sich unter mehr oder weniger großem Ausbiegen der Lasche leicht in das Durchtrittsfenster einfädeln. Es braucht dazu nicht in Querrichtung seiner Erstreckung genickt zu werden oder dergleichen. Trotzdem ist ein sicherer Sitz gewährleistet zwischen Kantenschutz-Eckwinkel und Umschnürungsband, gleichgültig, ob sich das Umschnürungsband in der horizontalen Ebene oder in der vertikalen Ebene erstreckt. Der durch das freie Vorstehen der Laschen mit einem Abstand zur Eckwinkelanlageebene gebildete, das Band führende Schacht erweist sich von Vorteil, da selbst bei Einhaltung der für die Kantenschutzwirkung genügenden Materialstärke der Eckwinkelschenkel die sich an das Durchtrittsfenster anschließende Erstreckung des Umschnürungsbandes auch in gespanntem Zustand keine den Sitz des Kantenschutzwinkels beeinträchtigende Ausbiegung der Laschen bewirkt. Die schiefwinklige Ausrichtung des Schlitzes unter Bildung zweier elastisch ausbiegbaren Laschen begünstigt das Einfädeln des Bandes und verhindert selbst dann ein selbsttätiges Herauswandern des Bandes, wenn man zur weiteren Erleichterung des Einfädelns unter leichtem Ausbiegen der Lasche den Schlitz nahe des querseitigen Endes des Durchtrittsfensters einmünden läßt, wobei der Schachtfreiraum ebenfalls dazu beiträgt, jedes Herauswandern zu verhindern.

Eine besonders hohe Zuverlässigkeit wird dadurch erzielt, daß das Band nur durch das Abspreizen einer der elastischen Nasen, die von den Enden der durch den schiefwinkligen Schlitz getrennten Laschen gebildet werden, und anschließendem Schieben derselben unter eine der beiden Bandkanten aus dem Fenster entfernt werden kann, da aufgrund der besonderen Ausgestaltung die unter dem Schlitz liegende Bandkante immer von beiden Laschen überdeckt wird. Selbst bei einer Rundung der Mündungskanten ergibt sich kein selbsttätiges Ausfädeln des Bandes aus dem Durchtrittsfenster.

Das Band erhält an den Kanten der Eckwinkel einen besonderen Schlitz gegenüber etwaigem Durchrutschen bzw. Duchbrechen, da es von Auflagerippen umgeben ist und die Kante des Eckwinkels als den Biegeradius vergrößerndes Halbrohr ausgestaltet ist.

Der Gegenstand ist aus der beiliegenden Zeichnung in einem Ausführungsbeispiel dargestellt. Es zeigen:

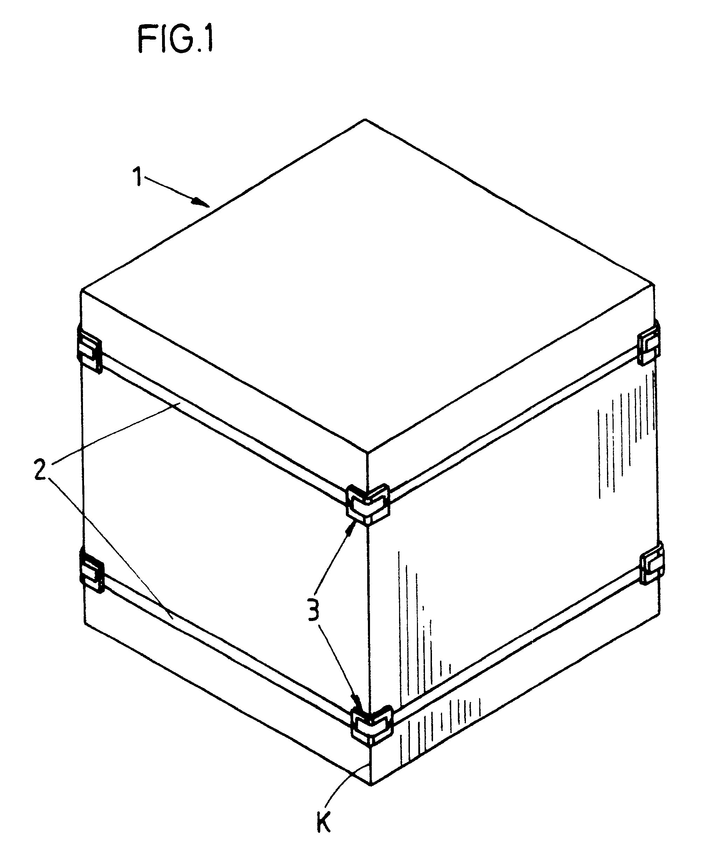

Fig. 1 eine perspektivische Darstellung eines mit den Kantenschutz-Eckwinkeln ausgestatteten Packstückes,

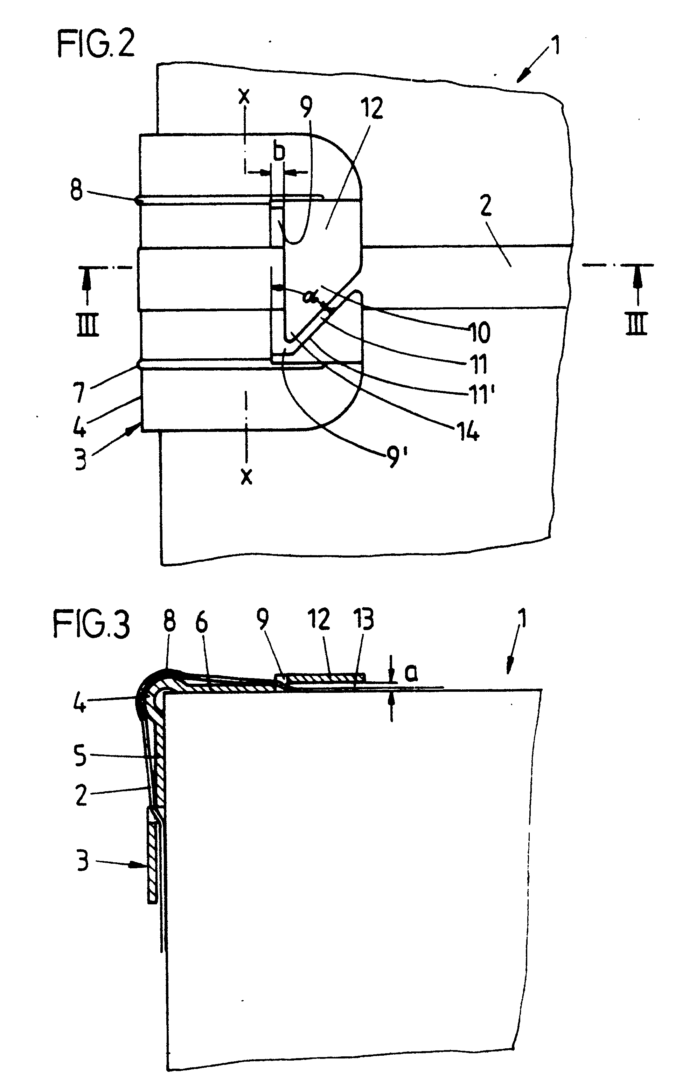

Fig. 2 eine Ansicht gegen eine mit Eckwinkel bestückte Packstückseite,

Fig. 3 einen Schnitt nach der Linie III-III der Fig. 2,

Fig. 4 perspektivische Darstellung des Kantenschutz-Eckwinkels,

Fig. 5 eine das Ausbiegen der Lasche (zum Einfädeln des Bandes) veranschaulichende perspektivische Darstellung,

Fig. 6 die gleiche Darstellung bei zugeordnetem Umschnürungsband und

Fig. 7 die gleiche Darstellung bei in die Grundstellung zurückgetretener Lasche.

Das Packstück 1 ist mit dem Umschnürungsband 2 gefaßt und besitzt an den Packstückkanten K zum Schutz gegen ein Einschneiden des Umschnürungsbandes die Kantenschutz-Eckwinkel 3.

Jeder Kantenschutz-Eckwinkel hat einen außenseitig gerundeten Scheitelbereich 4 und die beiden Schenkel 5 und 6.

Auf den Schenkeln 5 und 6 sind Auflagerippen 7 und 8 vorgesehen, zwischen denen sich das Umschnürungsband 2 so erstreckt, daß die Auflagerippen in ihrer Höhe über die Dicke des Bandes herausragen.

Der Kantenschutz-Eckwinkel ist als Ganzes aus elastisch rückstellendem Kunststoff erstellt.

Im Endbereich beider Schenkel 5 und 6 sind Umschnürungsband-Durchtrittsfenster 9 vorgesehen. Diese nehmen flächenmäßig ein Vielfaches des Querschnittes des Umschnürungsbandes 2 ein, und zwar insbesondere dadurch, daß die Breite b jedes Fensters ein Vielfaches der Dicke des Umschnürungsbandes ist. Jedes Durchzugsfenster 9 ist darüber hinaus zum Rand 10 des Schenkels 5 bzw. 6 hin offen, und zwar durch einen Schlitz 11, der auch möglichst schmal gehalten ist, max. etwa entsprechend der Dicke des Bandes 2. Dieser erstreckt sich schiefwinklig (Winkel Alpha) zur Erstreckung x-x des Durchtrittsfenster. Sein Mündungsende 11′ liegt nahe des querseitigen Endes 9′ des Durchtrittsfenster.

Der Rand 10 des Schenkels 5 bzw. 6, der die Lasche 12 bildet, steht um einen Abstand a zur Eckwinkelanlagefläche vor. Der abgehobene, geschlitze Rand bildet so einen Schacht 13 mit der Höhe a, der etwa der Materialdicke des Eckwinkels entspricht und dabei größer als die Dicke des Bandes ist.

Die Anordnung des Durchtrittsfensters zum Schlitz ist diesbezüglich an beiden Eckwinkelschenkeln 5 und 6 vorzugsweise spiegelbildlich.

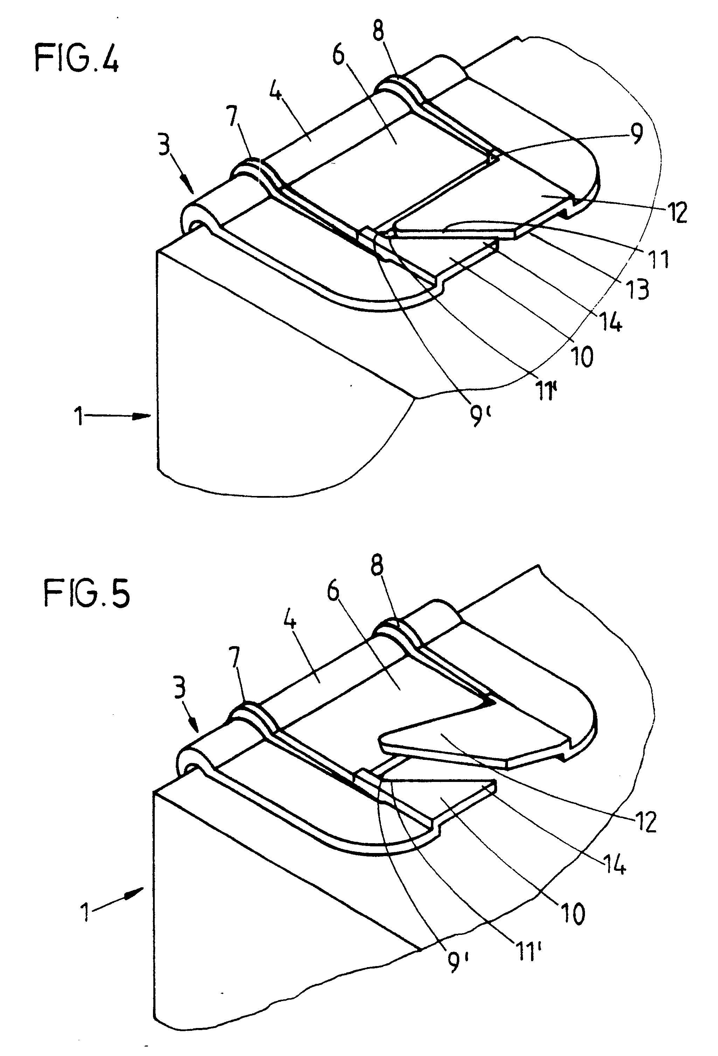

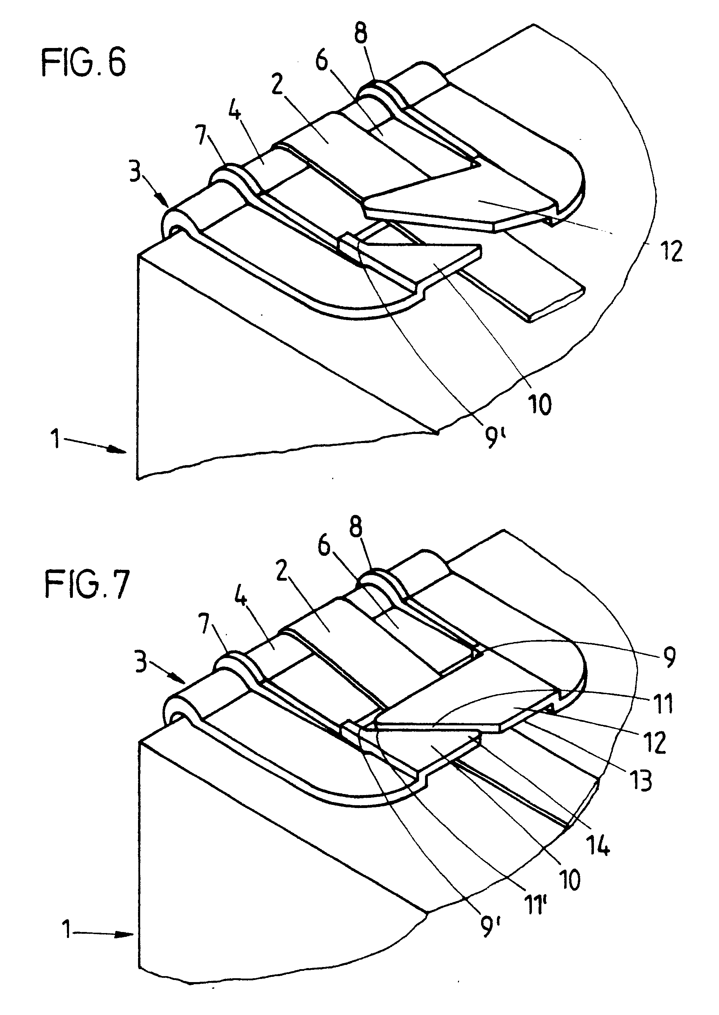

Die entsprechende Zuordnung des Durchtrittsfensters 9 und des Schlitzes 11 zueinander, bildet in Verbindung mit dem gewählten elastisch federnden, flexiblen Kunststoffmaterial eine elastisch ausbiegbare Lasche 12. Diese begünstigt das Einbringen des Bandes 2 in das Durchtrittsfenster 9. Der Vorgang ist in den Fig. 5 - 7 veranschaulicht. Die Lasche 12 wird von Hand oder mittels Untergreifens ihrer Kante mit dem Umschnürungsband aus der Ebene des Schenkels 5 oder 6 ausgebogen, wie in Fig. 5 dargestellt. Anschließend wird durch die so vergrößerte Zugänglichkeit entsprechend Fig. 6 das Umschnürungsband in die kreuzende Lage zum Durchtrittsfenster 9 gebracht. Läßt man jetzt die Lasche wieder los, so nimmt sie die Stellung gemäß Fig. 7 ein; sie legt sich wieder auf die Oberseite des Bandes. Der gesamte weitere Vorgang des Umschnürens erfolgt derart, daß das Umschnürungsband nach diesem Auffädeln der Kantenschutz-Eckwinkel leicht angezogen wird; anschließend werden die Kantenschutz-Eckwinkel unter weiterem leichten Anziehen des Umschnürungsbandes auf den Kanten K entsprechend positioniert, woran anschließend das Spannen (vorzugsweise maschinell) des Bandes vorgenommen wird. Trotz leichter Einfädelbarkeit ergibt sich überraschend kein selbsttätiges Ausfädeln während dieses ganzen Umschnürungsvorgan

Der Rand 10 des Schenkels 5 bzw. 6, der die Lasche 12 bildet, steht um einen Abstand a zur Eckwinkelanlagefläche vor. Der abgehobene, geschlitze Rand bildet so einen Schacht 13 mit der Höhe a, der etwa der Materialdicke 5 des Eckwinkels entspricht und dabei größer als die Dicke des Bandes ist.

Die Anordnung des Durchtrittsfensters zum Schlitz ist diesbezüglich an beiden Eckwinkelschenkeln 5 und 6 vorzugsweise spiegelbildlich.

Die entsprechende Zuordnung des Durchtrittsfensters 9 und des Schlitzes 11 zueinander, bildet in Verbindung mit dem gewählten elastisch federnden, flexiblen Kunststoffmaterial eine elastisch ausbiegbare Lasche 12. Diese begünstigt das Einbringen des Bandes 2 in das Durchtrittsfenster 9. Der Vorgang ist in den Fig. 5 - 7 veranschaulicht. Die Lasche 12 wird von Hand oder mittels Untergreifens ihrer Kante mit dem Umschnürungsband aus der Ebene des Schenkels 5 oder 6 ausgebogen, wie in Fig. 5 dargestellt. Anschließend wird durch die so vergrößerte Zugänglichkeit entsprechend Fig. 6 das Umschrürungsband in die kreuzende Lage zum Durchtrittsfenster 9 gebracht. Läßt man jetzt die Lasche wieder los, so ninmt sie die Stellung gemäß Fig. 7 ein; sie legt sich wieder auf die Oberseite des Bandes. Der gesamte weitere Vorgang des Umschnürens erfolgt derart, daß das Umschnürungsband nach diesem Auffädeln der Kantenschutz-Eckwinkel leicht angezogen wird; anschließend werden die Kantenschutz-Eckwinkel unter weiterem leichten Anziehen des Umschnürungsbandes auf den Kanten K entsprechend positioniert, woran anschließend das Spannen (vorzugsweise maschinell) des Bandes vorgenommen wird. Trotz leichter Einfädelbarkeit ergibt sich überraschend kein selbsttätiges Ausfädeln während dieses ganzen Umschnürungsvorgan ges; es ergeben sich aber auch keine beim Transport des Packstückes nachteiligen Verhakungsöffnungen oder Kanten.

Ein Ausfädeln des Bandes ist nur durch Abspreizen der Nase 14 unter die Kante des Bandes möglich, wobei das Band dann über die abgespreizte Nase geschoben wird.

Alle in der Beschreibung erwähnten und in der Zeichnung dargestellten neuen Merkmale sind erfindungswesentlich, auch soweit sie in den Ansprüchen nicht ausdrücklich beansprucht sind.

## Ansprüche

1. Kantenschutz-Eckwinkel für umschnürte Packstücke, Gebinde oder dergleichen mit einem Umschnürungsband-Durchtrittsfenster, welches über einen Schlitz zum benachbarten Rand des Kantenschutz-Eckwinkels hin offen ist, dadurch gekennzeichnet, daß zumindest der dem Schlitz (11) zum Rand (10) hin benachbarte Bereich als elastisch ausbiegbare, mit Abstand zur Eckwinkelanlageebene frei vorstehenden Lasche (12) gestaltet ist, der Schlitz (11) schiefwinklig zur Erstreckungsrichtung (x-x) der Durchtrittsfenster (9) verläuft und eine zweite jenseits des Schlitzes liegende ebenfalls mit Abstand zur Eckwinkelanlageebene frei vorstehende Lasche vorgesehen ist.

2. Kantenschutz-Eckwinkel nach Anspruch 1, dadurch gekennzeichnet, daß der Schlitz (11) nahe des querseitigen Endes (9') des Durchtrittsfensters (9) in dieses einmündet.

3. Kantenschutz-Eckwinkel nach einem oder mehreren der vorhergehenden Ansprüche, dadurch gekennzeichnet, daß im Bereich beider Eckwinkelschenkel (5 und 6) entsprechende Durchtrittsfenster (9) und Schlitze (10) vorgesehen sind.

4. Kantenschutz-Eckwinkel nach einem oder mehreren der vorhergehenden Ansprüche, dadurch gekennzeichnet, daß die Größe des Abstandes etwa der Dicke des Echwinkel-Schenkels entspricht.

5. Kantenschutz-Eckwinkel nach einem oder mehreren der vorhergehenden Ansprüche, dadurch gekennzeichnet, daß etwa fluchtend zu dem die Laschen bildenden Stufen Auflagerippen verlaufen, die von der in Form eines Halbrohres gerundeten Eckwinkelschenkelkante ausgehen, und mit ihrer Scheitellinie eine größere Höhe aufweisen als die Oberkante der Stufen.

# FIG.1

FIG.2

FIG.3

6

FIG.4

FIG.5

FIG. 6

FIG. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 973 720 (SCHMID) <br> * Spalte 8, Zeile 7 - Spalte 9, Zeile 23; Figuren 9,11,12 * <br> --- | 1,3-4 | B 65 D 71/04 |
| Y | US-A-3 218 686 (RUBENSTEIN) <br> * Figur 4 * <br> --- | 1,3-4 | |
| A | FR-A- 661 885 (RAVIGNEAUX) <br> * Figur 3 * <br> --- | 2 | |
| A | DE-U-8 803 785 (VÖLKEL; WERRY) <br> * Seite 5, Absatz 1; Figuren 1,2 * <br> ----- | 5 | |
| | | | **RECHERCHIERTE SACHGEBIETE (Int. Cl.5)** <br><br> B 65 D <br> A 44 B |

Der vorliegende Recherchenbericht wurde für alle Patentansprüche erstellt

| Recherchenort | Abschlußdatum der Recherche | Prüfer |
|---|---|---|
| DEN HAAG | 26-03-1990 | BRIDAULT A.A.Y. |